# EUROPEAN PATENT SPECIFICATION

(11) **EP 0 286 249 B1**
(45) Date of publication and mention of the grant of the patent: **24.02.1993**
(21) Application number: 88302296.4
(22) Date of filing: 16.03.1988
(51) Int. Cl.: B29C 33/14, B29C 67/18

(54) **Connectors**
Verbindungselemente
Connecteurs

(30) Priority: 07.04.1987 GB 8708313
(43) Date of publication of application: 12.10.1988
(73) Proprietor: TRW United-Carr Ltd., Aylesbury Buckinghamshire HP19 3QA (GB)
(72) Inventor: Barnett, Barry Roger Michael, Aylesbury Buckinghamshire (GB); Ellis, David Charles, Aylesbury Buckinghamshire (GB)
(74) Representative: Abbie, Andrew Kenneth

(56) References cited:
- EP-A- 0 145 603
- CH-A- 397 221
- DE-A- 2 917 739
- GB-A- 959 867
- GB-A- 2 201 629
- US-A- 3 334 771
- US-A- 4 400 336
- PATENT ABSTRACTS OF JAPAN, vol. 10, no. 40 (M-454)[2097], 18th February 1986; & JP-A-60 192 609 (TOYOTA JIDOSHA K.K.) 01-10-1985
- PATENT ABSTRACTS OF JAPAN, vol. 8, no. 12 (M-269)[1449], 19th January 1984; & JP-A-58 173 630 (HONDA GIKEN KOGYO K.K.) 12-10-1983
- PATENT ABSTRACTS OF JAPAN, vol. 9, no. 152 (M-391)[1875], 27th June 1985; & JP-A-60 29 355 (TOYODA GOSEI K.K.) 14-02-1985

## Description

This invention relates to connectors and more particularly to the insert moulding of connector components in articles.

A method of insert moulding a connector component in an article including mounting a connector component on a mould part which partly defines a mould cavity for the article such that a connector portion of the connector component is received in a recess in the mould part which does not form part of the mould cavity is known. One problem with such a known method is that moulding material introduced into the mould cavity for forming the article may flow into the recess and at least partly cover the connector portion to render the latter unsuitable for forming a connection.

Each of JP-A-60-192609 and JP-A-58-173 630 discloses a method of insert moulding a connector component having a connector portion in an article including mounting the connector component to a mould part which partly defines a mould cavity for the article such that the connector portion is received in a recess in the mould part and said recess is closed off from said mould cavity.

In each of the above-mentioned Japanese specifications there is disclosed a connector component having a connector portion and mountable on a mould part having a recess for receiving the connector portion for insert moulding, the connector portion of the component projecting from a carrier portion thereof, and means for mounting the component to the mould part and for closing the recess off when the component is mounted to the mould part with the connector portion received in the recess.

In each of the above-mentioned Japanese specifications a single element of the connector functions both to mount the component to the mould part and to close off the recess during moulding. As will be apparent these two functions require different mechanical characteristics of the element - that is rigidity to ensure stable mounting and flexibility to ensure proper closing off, i.e. sealing. Thus the mechanical characteristics of the single element performing these functions in the Japanese specifications must be a compromise. In fact in JP-A-60-192 609 the element is elastic since presumably closing off (sealing) is considered more important and in JP-A-58-173 630 the element is rigid since presumably stable mounting is considered more important.

An object of the present invention is to avoid such a compromise.

The invention includes a method of insert moulding a connector component having a connector portion in an article including mounting the connector component to a mould part which partly defines a mould cavity for the article such that the connector portion is received in a recess in the mould part and said recess is closed off from said mould cavity characterized in that the connector component is mounted to the mould part by use of mounting means provided on a carrier portion of the component and the recess is closed off from the mould cavity by a flexible flange provided on the connector portion and spaced from the carrier portion which flexible flange is deflected toward the carrier portion of the connector component.

The invention also includes a connector component having a connector portion and mountable on a mould part having a recess for receiving the connector portion for insert moulding, the connector portion of the component projecting from a carrier portion thereof, and means for mounting the component to the mould part and for closing the recess off when the component is mounted to the mould part with the connector portion received in the recess characterized in that said mounting and closing off means comprises respective means for mounting the component to the mould part and means for closing the recess off, said carrier portion being provided with said mounting means and said closing off means comprising a flexible flange spaced from the carrier portion and said mounting means and deflectable towards the carrier portion.

The connector portion may comprise a male or a female connector. For example the component may be provided with a male connector comprising a headed stud. In this case, the flange may extend completely around the stud intermediate the head thereof and the carrier portion of the component.

When the connector portion comprises a female connector it may comprise a hollow boss provided with a keyhole opening in an end wall thereof remote from the carrier portion. The hollow boss may be provided with a side opening which extends into the base of the keyhole opening. Such a side opening may be provided in a straight side of the boss and the flange may extend around the boss except for the straight side thereof.

The carrier portion of the component may be provided with aperture means for receiving projection means of the mould part for mounting the carrier portion to the mould part.

The aperture means may comprise at least one boss extending from the carrier means and provided with a through-bore, which may be provided with a restriction, or a recess, intermediate its ends for locating a mounting projection in the through-bore.

In order that the invention may be well understood, two embodiments thereof, will now be described by way of example only, with reference to the accompanying drawings in which:
Figure 1 is a top plan view of a connector component having a connector portion comprising a headed stud;
Figure 2 is a side view of the same component shown mounted to a mould part for insert moulding;
Figure 3 is a top plan view of a connector component having a connector portion comprising a hollow boss provided with a keyhole opening;
Figure 4 is a side view of the same component shown mounted to a mould part for insert moulding; and
Figure 5 is a view of the same component shown mounted to the same mould part for insert moulding taken along the line V-V in Figure 4.

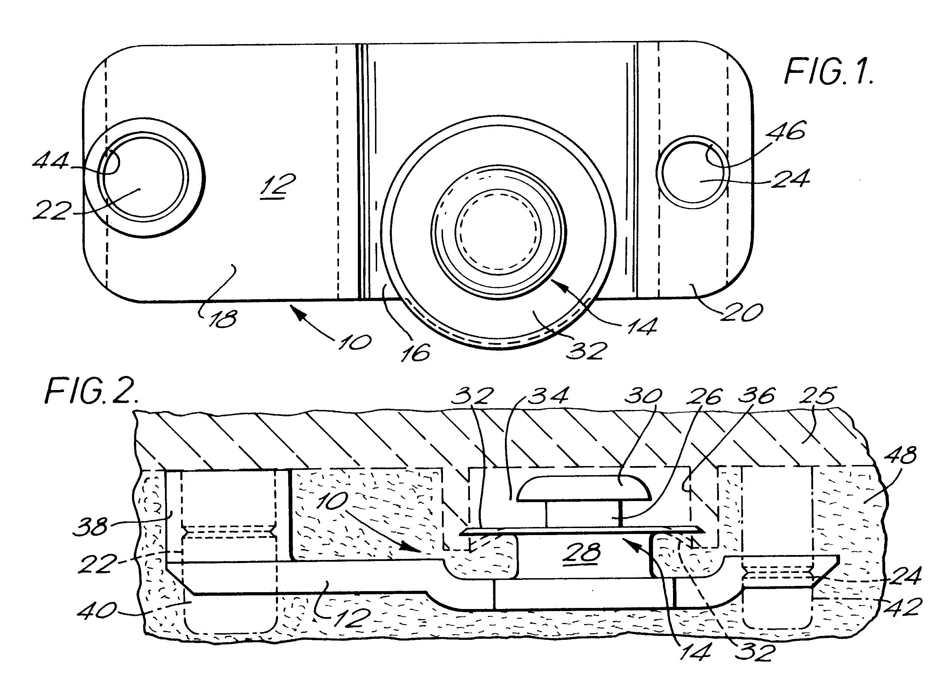

Referring first to Figures 1 and 2 there is shown a connector component 10 comprising a carrier portion 12 and a connector portion 14 which projects from the carrier portion. The carrier portion 12 comprises a generally rectangular plate having a dished central portion 16 intermediate its end portions 18 and 20. The connector portion 14 projects upwardly from the dished central portion 16 and the end portions 18 and 20 are provided with respective mounting apertures 22 and 24 for mounting the component to a mould part, which is shown in dotted-line in Figure 2 at 25 and which partly defines a mould cavity for an article in which the component is to be insert moulded.

The connector portion 14 comprises a headed stud having a shank 26 extending from a base 28 and provided at its free end with a head 30. As illustrated the shank 26, base 28 and head 30 are all circular in cross section with the diameter of the base being greater than that of the head. The connector portion 14 is provided with a flexible flange 32 which is spaced from the central portion 16 of the carrier portion of the component and the mounting apertures 22 and 24. The flange 32 extends completely around the stud intermediate the head 30 thereof and the central portion 16 of the carrier portion. The flange which is annular in configuration, extends radially outwardly from the base 28 and in its normal condition (which is shown in solid line in Figure 2) extends perpendicularly to the axis of the headed stud. However, when the component 10 is mounted to the mould part 25 as shown in Figure 2 with the connector portion 14 received in a recess 34 defined in the mould part by an annular internal wall 36 thereof, the flange 32 is deflected by the wall 36 towards the central portion 16 of the carrier portion and closes the recess 34 off from the mould cavity for the article in which the connector component is to be insert moulded. The deflected position of the flange 32 is shown in dotted line in Figure 2.

In the illustrated embodiment, one mounting aperture 24 is provided in the thickness of end portion 20 of the carrier portion 12 and the other mounting aperture 22 is provided in a boss 38 extending from the end portion 18 of the carrier portion. The two apertures 22, 24 are formed as through-bores and receive respective mounting projection means which are secured to and project from the mould part 25 and are illustrated in chain dotted line in Figure 2 at 40 and 42 as respective pins. As illustrated, each through-bore 22, 24 is provided with a radially inwardly extending restriction 44, 46 intermediate its ends for engagement with a corresponding restriction on the pins 40, 42 for locating the pins in the through-bores. Alternatively, the through-bores could be provided with respective recesses intermediate their ends for receiving corresponding projections on the pins for locating the pins in the through-bores. As illustrated, the restrictions 44, 46 comprise respective circumferentially extending ribs which locate in corresponding annular grooves in the pins 40, 42. Through-bore 22 and the pin 40 therefor are of larger diameter than through-bore 24 and the pin 42 therefor to ensure that the component is mounted on the mould part 25 in a desired orientation relative thereto. It will be noted from Figure 2 that when the component 10 is mounted to the mould part 25, the end face of the boss 38 abuts a surface of the mould part, thus providing a further location for the component relative to the mould part.

When moulding material is introduced into the mould cavity as illustrated by the random shading 48, the moulding material embeds the carrier portion of the component within the article being formed but does not flow into the recess 34 which is closed off by the deflected flange 32. Thus, the shank 26 and head 30 remain free from moulding material.

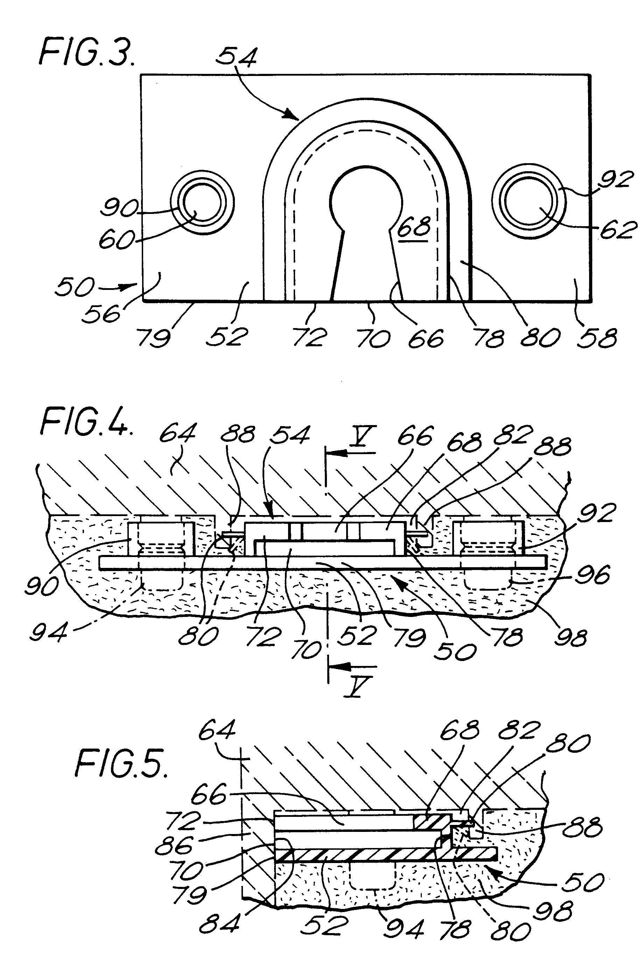

Referring now to Figures 3 to 5, there is shown a connector component 50 comprising a carrier portion 52 and a connector portion 54 which projects from a central portion of the carrier portion 52. End portions 56, 58 of the carrier portion are provided with respective mounting apertures 60, 62 for mounting the component 50 to a mould part, which is shown in dotted line in Figures 4 and 5 at 64 and which partly defines a mould cavity for an article in which the component 50 is to be insert moulded.

The connector portion 54 is a female connector and comprises a hollow boss provided with a keyhole opening 66 in an end wall 68 of the boss remote from the carrier portion 52. The hollow boss is provided with a side opening 70 which extends into the base of the keyhole opening 66. The side opening is provided in a straight side wall 72 of the boss which extends between the ends of a substantially U-shaped side wall 78 of the boss at an edge 79 of the carrier portion. The side opening 70 extends to the carrier portion 52.

The connector portion 54 is provided with a flexible flange 80 which is spaced from the carrier portion 52 and which extends around the boss except for the straight side 72 thereof. The flange 80 extends outwardly from the U-shaped side wall 78 and in its normal condition (which is shown in solid line in Figures 4 and 5) extends parallel to the end wall 68 of the boss. However, when the component 50 is mounted to the mould part 64 as shown in Figures 4 and 5 with the connector portion 54 received in a U-shaped recess 82 defined in the mould part by an internal straight wall 84 of a shut-out portion 86 of the mould and an internal U-shaped wall 88 of the mould with the straight side wall 72 of the boss and the adjacent portion of the edge 79 of the carrier portion in abutment with the wall 84, the flange 82 is deflected by the wall 88 towards the carrier portion 52 and closes the recess 82 off from the mould cavity for the article in which the connector component 50 is to be insert moulded. The deflected position of the flange 80 is shown in dotted line in Figures 4 and 5.

In the illustrated embodiment, each mounting aperture 60, 62 of component 50 is provided in a respective boss 90, 92 extending from the carrier portion and is formed as a through-bore. These through-bores receive respective mounting projection means which are secured to and project from the mould part 64 and are illustrated in Figures 4 and 5 in chain dotted line at 94 and 96 (Figure 4 only) as respective pins. As with the corresponding mounting arrangement in the first embodiment, each through-bore 60, 62 is provided with a radially inwardly extending restriction intermediate its ends for engagement with a corresponding restriction on the pins 94, 96 although of course they could be provided with respective recesses for receiving corresponding projections on the pins. Through-bore 62 and the pin 96 therefor are of larger diameter than through-bore 60 and the pin 94 therefor to ensure that the component 50 is mounted on the mould part 64 in a desired orientation relative thereto. The end faces of the bosses 90, 92 may be arranged to abut the surface of the mould part or, as illustrated in Figure 4, they may be spaced therefrom.

When moulding material is introduced into the mould cavity as illustrated by the random shading 98 in Figures 4 and 5, the moulding material embeds the carrier portion 52 of the component within the article being formed but does not flow into the recess 82 which is closed off by the deflected flange 80. Neither does any moulding material flow into the hollow boss through the opening 70 thereof in view of the location of the shut-out portion 86 of the mould part 64 with its internal wall 84 in abutment with the side wall 72 of the boss and the adjacent portion of the edge 79 of the carrier portion. Thus, the moulding material does not enter the hollow boss.

Whilst the above embodiments have been described in relation to insert moulding connector components in articles generally, they are both particularly applicable for insert moulding connector components in vehicle panels moulded from polyurethane foam. In such a case, of course, the vehicle panel would normally be provided with a plurality of connector components insert moulded therein to provide it with connector means for connecting trim pads or other items to the panel. The components 10, 50 themselves are preferably injection moulded from a plastic material, for example an acetal.

## Claims

1. A connector component (10; 50) having a connector portion (14; 54) and mountable on a mould part (25; 64) having a recess (34; 82) for receiving the connector portion (14; 54) for insert moulding, the connector portion (14; 54) of the component (10; 50) projecting from a carrier portion (12; 52) thereof, and means (22, 24, 32; 60, 62, 80) for mounting the component (10; 50) the mould part (25; 64) and for closing the recess (34; 82) off when the component (10; 50) is mounted to the mould part (25; 64) with the connector portion (14; 54) received in the recess (34; 82) characterized in that said mounting and closing off means (22, 24, 32; 60, 62, 80), comprises respective means (22, 24; 60, 82) for mounting the component (10; 50) to the mould part (25; 64) and means (32; 80) for closing the recess (34; 82) off, said carrier portion (12; 52) being provided with said mounting means (22, 24; 60, 62) and said closing off means (32; 80) comprising a flexible flange (32; 80) spaced from the carrier portion (12; 52) and said mounting means (22, 24; 60, 62) and deflectable towards the carrier portion (12; 52).

2. A component as claimed in claim 1, wherein the connector portion (14) comprises a male connector.

3. A component as claimed in claim 2, wherein the male connector comprises a headed stud.

4. A component as claimed in claim 3, wherein said flange (32) extends completely around the stud intermediate the head (30) thereof and the carrier portion (14).

5. A component as claimed in claim 1, wherein the connector portion (54) comprises a female connector.

6. A component as claimed in claim 5, wherein the female connector comprises a hollow boss provided with a keyhole opening (66) in an end wall (68) thereof remote from the carrier portion (52).

7. A component as claimed in claim 6, wherein the hollow boss is provided with a side opening (70) which extends into the base of the keyhole opening (66).

8. A component as claimed in claim 7, wherein the side opening (70) is provided in a straight side wall (72) of the boss.

9. A component as claimed in claim 8, wherein the side opening (70) extends to the carrier portion (52).

10. A component as claimed in claim 8 or 9, wherein the flange (80) extends around the boss except for said straight side wall (72).

11. A component as claimed in any one of the preceding claims, wherein the carrier portion (12; 52) is provided with aperture means (22, 24; 60, 62) for receiving projection means (40, 42; 94, 96) of the mould part (25; 64) for mounting the carrier portion (12; 52) to the mould part (25; 64).

12. A component as claimed in claim 11, wherein the aperture means (22, 24; 60, 62) comprises at least one boss (38; 90, 92) extending from the carrier portion (12; 52) and provided with a through-bore.

13. A component as claimed in claim 12, wherein the or each through-bore is provided with a restriction (44) intermediate its ends for locating a mounting projection (40; 94, 96) in the through-bore.

14. A component as claimed in claim 12, wherein the through-bore is provided with a recess intermediate its ends for locating a mounting projection (40; 94, 96) in the through-bore

15. A method of insert moulding a connector component (10; 50) having a connector portion (14; 54) in an article including mounting the connector component (10; 50) to a mould part (25; 64) which partly defines a mould cavity for the article such that the connector portion (14; 54) is received in a recess (34; 82) in the mould part (25; 64) and said recess (34; 82) is closed off from said mould cavity characterized in that the connector component (10; 50) is mounted to the mould part (25; 64) by use of mounting means (22, 24; 60, 62) provided on a carrier portion (12; 52) of the component (10; 50) and the recess (34; 82) is closed off from the mould cavity by a flexible flange (32; 80) provided on the connector portion (14; 54) and spaced from the carrier portion (12; 52) which flexible flange (32; 80) is deflected toward the carrier portion (12; 52) of the connector component (10; 50).

## Patentansprüche

1. Verbindungselement (10; 50), das einen Verbindungsbereich (14; 54) aufweist und zur Befestigung an einem Formpreßteil (25; 64) ausgelegt ist, das eine Ausnehmung (34; 82) zur Aufnahme des Verbindungsbereichs (14; 54) zum Einpressen aufweist, wobei der Verbindungsbereich (14; 54) des Elements (10; 50) von einem Trägerbereich (12; 52) hervorrragt, und das eine Vorrichtung (22, 24, 32; 60, 62, 80) zur Befestigung des Elements (10; 50) am Formpreßteil (25; 64) und zum Abschließen der Ausnehmung (34; 82) aufweist, wenn das Element (10; 50) am Formpreßteil (25; 64) befestigt und der Verbindungsbereich (14; 54) in der Ausnehmung aufgenommen ist,
dadurch gekennzeichnet, daß
die Befestigungs- und Abschließvorrichtung (22, 24, 32; 60, 62, 80) entsprechende Vorrichtungen (22, 24; 60, 82) zur Befestigung des Elements (10; 50) am Formpreßteil (25, 64) umfaßt sowie eine Vorrichtung (32; 80) zum Abschließen der Ausnehmung (34; 82), wobei der mit der Befestigungsvorrichtung (22, 24; 60, 62) und der Abschließvorrichtung (32; 80) versehene Trägerbereich (12; 52) einen flexiblen, vom Trägerbereich (12; 52) und der Befestigungsvorrichtung (22, 24; 60, 62) beabstandeten Flansch (32; 80) aufweist, der zum Trägerbereich (12; 52) hin abbiegbar ist.

2. Element nach Anspruch 1,
bei welchem der Verbindungsbereich (14) ein Steckverbindungselement aufweist.

3. Element nach Anspruch 2,
bei welchem das Steckverbindungselement eine Schraube mit Kopf aufweist.

4. Element nach Anspruch 3,
bei welchem der Flansch (32) zwischen dem Kopf (30) und dem Trägerbereich vollständig um die Schraube herum verläuft.

5. Element nach Anspruch 1,
bei welchem der Verbindungsbereich (54) eine Buchse aufweist.

6. Element nach Anspruch 5,
bei welchem die Buchse eine hohle Nabe aufweist, die in einer von dem Trägerbereich (52) entfernten Stirnwand (68) mit einer schlüssellochförmigen Öffnung (66) versehen ist.

7. Element nach Anspruch 6,
bei welchem die hohle Nabe mit einer seitlichen Öffnung (70) versehen ist, die sich in die Basis der schlüssellochförmigen Öffnung (66) hinein erstreckt.

8. Element nach Anspruch 7,
bei welchem die seitliche Öffnung (70) in einer geraden Seitenwandung (72) der Nabe vorgesehen ist.

9. Element nach Anspruch 8,
bei welchem die seitliche Öffnung (70) sich zum Trägerbereich (52) erstreckt.

10. Element nach Anspruch 8 oder 9,
bei welchem der Flansch (80) abgesehen von der geraden Seitenwandung (72) um die Nabe herum verläuft.

11. Element nach einem der vorhergehenden Ansprüche,
bei welchem der Trägerbereich (12; 52) mit einer Öffnung (22, 24; 60, 62) zur Aufnahme eines Vorsprungs (40, 42; 44, 96) des Formpreßteils (25; 64) zur Befestigung des Trägerbereichs (12; 52) am Formpreßteil (25; 64) versehen ist.

12. Element nach Anspruch 11,
bei welchem die Öffnung (22, 24; 60, 62) mindestens eine sich vom Trägerbereich (12; 52) erstreckende Nabe (38; 90, 92) aufweist, die mit einer Durchgangsbohrung versehen ist.

13. Element nach Anspruch 12,
bei welchem die bzw. jede Durchgangsbohrung zwischen ihren beiden Enden mit einer Verengung (44) zur Fixierung eines Befestigungsvorsprungs (40, 94, 96) in der Durchgangsbohrung versehen ist.

14. Element nach Anspruch 12,
bei welchem die Durchgangsbohrung zwischen ihren Enden mit einer Ausnehmung zur Fixierung eines Befestigungsvorsprungs (40; 94, 96) in der Durchgangsbohrung versehen ist.

15. Verfahren zum Einpressen eines einen Verbindungsbereich (14; 54) aufweisenden Verbindungselements (10; 50) in einen Gegenstand, bei welchem das Verbindungselement (10; 50) an einem Formpreßteil (25; 64) befestigt wird, in dem teilweise ein Hohlraum für den Gegenstand derart gebildet ist, daß der Verbindungsbereich (14; 54) in einer Ausnehmung (34; 82) in dem Formpreßteil (25; 64) aufgenommen wird, und bei dem die Ausnehmung (34; 82) vom Hohlraum abgeschlossen wird,
dadurch gekennzeichnet, daß
das Verbindungselement (10; 50) am Formpreßteil (25; 64) durch Verwendung einer auf einem Trägerbereich (12; 52) des Elements (10; 50) vorgesehenen Befestigungsvorrichtung (22, 24; 60, 62) befestigt wird, und daß die Ausnehmung (34; 82) vom Hohlraum durch einen flexiblen Flansch (32; 80) abgeschlossen wird, der an dem Verbindungsbereich (14; 54) vorgesehen und vom Trägerbereich (12; 52) beabstandet ist, wobei der flexible Flansch (32; 80) zum Trägerbereich (12; 52) des Verbindungselements (10; 50) hin abgebogen wird.

## Revendications

1. Elément connecteur (10 ; 50) comprenant une partie de connexion (14 ; 54) et pouvant être monté sur une partie de moule (25 ; 64) munie d'un évidement (34 ; 82) pour recevoir la partie de connexion (14 ; 54), en vue d'une intégration par moulage, la partie de connexion (14 ; 54) de l'élément (10 ; 50) faisant saillie au-delà d'une partie de support (12 ; 52) de ce dernier ; et des moyens (22, 24, 32 ; 60, 62, 80) pour monter l'élément (10 ; 50) sur la partie de moule (25 ; 64), et pour obturer l'évidement (34 ; 82) lorsque l'élément (10 ; 50) est monté sur la partie de moule (25 ; 64) et lorsque la partie de connexion (14 ; 54) est logée dans l'évidement (34 ; 82), caractérisé par le fait que lesdits moyens (22, 24, 32 ; 60, 62, 80) de montage et d'obturation comprennent des moyens respectifs (22, 24 ; 60, 82) pour monter l'élément (10 ; 50) sur la partie de moule (25 ; 64), et des moyens (32 ; 80) pour obturer l'évidement (34 ; 82), ladite partie de support (12 ; 52) étant pourvue desdits moyens de montage (22, 24 ; 60, 62), et lesdits moyens d'obturation (32 ; 80) consistant en une collerette flexible (32 ; 80) qui est espacée de la partie de support (12 ; 52) et desdits moyens de montage (22, 24 ; 60, 62), et peut fléchir en direction de la partie de support (12 ; 52).

2. Elément selon la revendication 1, dans lequel la partie de connexion (14) consiste en un connecteur mâle.

3. Elément selon la revendication 2, dans lequel le connecteur mâle présente un tenon épaulé.

4. Elément selon la revendication 3, dans lequel ladite collerette (32) s'étend intégralement autour du tenon, à mi-distance entre la tête (30) de ce dernier et la partie de support (14).

5. Elément selon la revendication 1, dans lequel la partie de connexion (54) consiste en un connecteur femelle.

6. Elément selon la revendication 5, dans lequel le connecteur femelle présente une protubérance creuse, percée d'un orifice (66) du type trou de serrure ménagé dans une paroi extrême (68) de ladite protubérance qui est éloignée de la partie de support (52).

7. Elément selon la revendication 6, dans lequel la protubérance creuse est percée d'une ouverture latérale (70) fusionnant dans la base de l'orifice (66) du type trou de serrure.

8. Elément selon la revendication 7, dans lequel l'ouverture latérale (70) est ménagée dans une paroi latérale rectiligne (72) de la protubérance.

9. Elément selon la revendication 8, dans lequel l'ouverture latérale (70) s'étend vers la partie de support (52).

10. Elément selon la revendication 8 ou 9, dans lequel la collerette (80) s'étend autour de la protubérance, à l'exception de ladite paroi latérale rectiligne (72).

11. Elément selon l'une quelconque des revendications précédentes, dans lequel la partie de support (12 ; 52) est munie de moyens à ouverture (22, 24 ; 60, 62) pour recevoir des moyens saillants (40, 42 ; 94, 96) de la partie de moule (25 ; 64), en vue du montage de la partie de support (12 ; 52) sur la partie de moule (25 ; 64).

12. Elément selon la revendication 11, dans lequel les moyens à ouverture (22, 24 ; 60, 62) comprennent au moins une protubérance (38 ; 90, 92) s'étendant depuis la partie de support (12 ; 52), et percée d'un trou traversant.

13. Elément selon la revendication 12, dans lequel le ou chaque trou traversant est pourvu, à mi-distance entre ses extrémités, d'un resserrement (44) conçu pour le positionnement d'une saillie de montage (40 ; 94, 96) dans le trou traversant.

14. Elément selon la revendication 12, dans lequel le trou traversant est pourvu, à mi-distance entre ses extrémités, d'une dépouille conçue pour le positionnement d'une saillie de montage (40 ; 94, 96) dans le trou traversant.

15. Procédé d'intégration par moulage, dans un objet, d'un élément connecteur (10 ; 50) muni d'une partie de connexion (14 ; 54), consistant à monter l'élément connecteur (10 ; 50) sur une partie de moule (25 ; 64) qui délimite partiellement une cavité de moulage destinée à l'objet, de telle sorte que la partie de connexion (14 ; 54) soit logée dans un évidement (34 ; 82) pratiqué dans la partie de moule (25 ; 64), et que ledit évidement (34 ; 82) soit isolé de ladite cavité de moulage, caractérisé par le fait que l'élément connecteur (10 ; 50) est monté sur la partie de moule (25 ; 64) grâce à l'utilisation de moyens de montage (22, 24 ; 60, 62) prévus sur une partie de support (12 ; 52) de l'élément (10 ; 50), et l'évidement (34 ; 82) est isolé de la cavité de moulage par une collerette flexible (32 ; 80) ménagée sur la partie de connexion (14 ; 54) et espacée de la partie de support (12 ; 52), laquelle collerette flexible (32 ; 80) est infléchie en direction de la partie de support (12 ; 52) de l'élément connecteur (10 ; 50).
